# EUROPÄISCHE PATENTSCHRIFT

(11) **EP 4 431 985 B1**
(45) Veröffentlichungstag und Bekanntmachung des Hinweises auf die Patenterteilung: **25.12.2024**
(21) Anmeldenummer: 23162021.2
(22) Anmeldetag: 15.03.2023
(51) Int. Cl.: G01S 17/04, G01S 17/88, F16P 3/14, G01S 17/42, G01S 17/894, G01V 8/12, G01V 8/20

(54) **SICHERE OBJEKTVERFOLGUNG EINES OBJEKTS**
SECURE OBJECT TRACKING OF AN OBJECT
SUIVI D'OBJET SÉCURISÉ D'UN OBJET

(43) Veröffentlichungstag der Anmeldung: 18.09.2024
(73) Patentinhaber: SICK AG, 79183 Waldkirch (DE)
(72) Erfinder: Hammes, Dr. Markus, 79117 Freiburg (DE)

(56) Entgegenhaltungen:
- EP-A1- 1 835 306
- EP-A1- 3 587 894
- EP-A2- 1 300 691

## Beschreibung

Die Erfindung betrifft eine Überwachungsvorrichtung und ein Verfahren zur sicheren Objektverfolgung eines Objekts nach dem Oberbegriff von Anspruch 1 beziehungsweise 15.

In der berührungslosen Überwachung zur Absicherung von Gefahren, etwa Maschinen im industriellen Umfeld oder Fahrzeuge in Logistikanwendungen, werden sehr häufig optoelektronische Sensoren eingesetzt. Gerade für komplexere Anwendungen sind hier vornehmlich ein Laserscanner und eine Kamera und insbesondere 3D-Kamera zu nennen.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Auch die dritte Raumkoordinate kann durch eine Relativbewegung in Querrichtung noch erfasst werden, beispielsweise durch einen weiteren Bewegungsfreiheitsgrad der Ablenkeinheit in dem Laserscanner oder indem das Objekt relativ zu dem Laserscanner bewegt wird.

Eine 3D-Kamera misst einen Abstand und gewinnt dadurch eine Tiefeninformation. Die erfassten dreidimensionalen Bilddaten mit Abstands- oder Entfernungswerten für die einzelnen Pixel werden auch als 3D-Bild, Entfernungsbild oder Tiefenkarte bezeichnet.

3D-Kameras gibt es in verschiedenen Technologien, darunter Lichtlaufzeit-, Stereoskopie- und Projektionsverfahren oder plenoptische Kameras. In einer noch etwas näher betrachteten Lichtlaufzeitkamera (TOF, Time of Flight) wird eine Szene mit amplitudenmoduliertem Licht ausgeleuchtet. Das aus der Szene zurückkehrende Licht wird empfangen und mit der gleichen Frequenz demoduliert, die auch für die Modulation des Sendelichts verwendet wird (Lock-In-Verfahren). Aus der Demodulation resultiert ein Amplitudenmesswert, der einem Abtastwert des Empfangssignals entspricht. Für die Phasenbestimmung eines periodischen Signals sind nach dem Nyquist-Kriterium mindestens zwei Abtastwerte notwendig. Deshalb wird die Messung mit unterschiedlichen relativen Phasenlagen zwischen den Signalen für die sendeseitige Modulation und die empfangsseitige Demodulation durchgeführt. Damit lässt sich dann die laufzeitbedingte absolute Phasenverschiebung zwischen Sende- und Empfangssignal ermitteln, die wiederum proportional zum Objektabstand in der Szene ist.

In der Anwendung zur Unfallvermeidung wird ein Schutzfeld überwacht, das während des Betriebs der Maschine vom Bedienpersonal nicht betreten werden darf. Erkennt der Sensor einen unzulässigen Schutzfeldeingriff, etwa ein Bein einer Bedienperson, so wird die Maschine in einen sicheren Zustand überführt. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik oder verschiedene Funktionsüberwachungen, speziell die Überwachung der Verschmutzung optischer Bauteile einschließlich einer Frontscheibe.

Ein Sicherheitslaserscanner oder eine Sicherheitskamera, die diesen Normen gerecht wird und für eine Schutzfeldauswertung ausgebildet ist, arbeitet intern mit sehr großen Informationsmengen der Scanpunktwolken oderTiefenkarten. Es wird aber lediglich eine hoch verdichtete binäre Information sicher nach außen zur Verfügung gestellt, nämlich ob das Schutzfeld verletzt ist oder nicht. Dafür wird üblicherweise ein sicherer Ausgang genutzt (OSSD, Output Signal Switching Device). Komplexere sichere Auswertungen wie eine Positionsbestimmung eines Objekts oder eine Objektverfolgung sind herkömmlich nicht verfügbar.

Zwar gibt es schon lange Algorithmen für eine Objektverfolgung mit optischer Erfassung, die auf klassischer Bildverarbeitung, Kalman-Filtern oder auch zunehmend künstlicher Intelligenz basieren. Das ist aber der sicherheitstechnischen Verwendung wegen der Komplexität und auch fehlender geeigneter Sensoren und Steuerungskomponenten nicht zugänglich. Denn selbst wenn es gelänge, einen Algorithmus durch entsprechende Sicherheitsmaßnahmen so zu härten, dass er den Sicherheitsnormen genügen würde, dann kann in einem Sicherheitslaserscanner oder einer Sicherheitskamera auf die dafür erforderlichen Scan- oder Bilddaten gar nicht sicher zugegriffen werden. Wie schon beschrieben, gibt es nach außen lediglich eine Schnittstelle für ein Bit sichere Information über eine Schutzfeldverletzung. Auch die internen Rechenressourcen des Sensors oder diejenigen einer Sicherheitssteuerung genügen bei Weitem nicht, um mit einem der bekannten Vorgehensweisen eine Objektverfolgung zu implementieren.

Aus jüngerer Zeit sind Sicherheitslaserscanner und Sicherheitskameras bekannt geworden, die mehrere Schutzfelder simultan auswerten. Allerdings ist die simultane Auswertung sehr rechenintensiv und nur eine äußerst begrenzte Anzahl paralleler Schutzfelder vorgesehen. Damit erhöht sich jedoch letztlich nur die extern verfügbare sichere Information von einem Bit auf mehrere Bit. Mehr als einige wenige Positionsklassen entsprechend den durch das jeweilige Schutzfeld festgelegten Bereichen sind dadurch nicht unterscheidbar, und das ist für eine Objektverfolgung nur in Sonderfällen ausreichend. Diese Anzahl mag sich in zukünftigen Gerätegenerationen erhöhen, aber das führt nicht zu Positionsgenauigkeiten, die mit einer Auswertung von Scanpunktwolken oder Bildern vergleichbar wären, und ändert deshalb nichts an der prinzipiellen Limitierung gegenüber einer Objektverfolgung mit vorhandenen Algorithmen.

Die EP 3 470 879 A1 konfiguriert in einem Laserscanner mindestens teilweise einander überlappende Überwachungsfelder. Dadurch entstehen Überwachungssegmente, die sich voneinander dadurch unterscheiden, welche Überwachungsfelder dort überlappen. Die hardwareseitig vorgesehene Anzahl Überwachungsfelder wird so auf die Überwachungssegmente verfeinert. Bei geschickter Konfiguration entstehen aus n Überwachungsfeldern 2ⁿ oder sogar noch etwas mehr Überwachungssegmente. Das erreicht aber immer noch keine besonders feine Auflösung, solange n hardwareseitig auf sehr kleine Werte beschränkt bleibt, und für größeres n würde sehr bald der Konfigurationsaufwand prohibitiv.

Die EP 3 709 106 A1 schlägt ein Sicherheitssystem vor, das komplexe nicht sichere Auswertungen durch weniger komplexe sichere Auswertungen validiert. In einer Ausführungsform werden Objekte einerseits anhand von Scanpunktwolken auf nicht sichere Weise lokalisiert. Andererseits gibt es ein Raster von Schutzfeldern. Die nicht sicher ermittelte feine Position wird mit der sicheren Rasterposition validiert. Wie schon erwähnt, ist die Scanpunktwolke eines Sicherheitslaserscanners aber in der Realität gar nicht auslesbar, es fehlt auch eine nicht sichere Schnittstelle zu diesem Zweck, so dass hierfür neue Geräte erforderlich sind. Außerdem bleibt eine sichere Position im engeren Sinne doch auf das Raster der Schutzfelder beschränkt, das wegen der geringen Anzahl möglicher Schutzfelder grob bleiben muss.

Aus der EP 1 835 306 A1 ist eine Einparkhilfe bekannt, die den rückwärtigen Raum mit Fresnel-Ringen ausleuchtet und mit einem Empfänger den Lichtpegel bestimmt. Streichen die Fresner-Ringe während der Bewegung des Fahrzeugs über ein Objekt, so erhöht oder erniedrigt sich der Lichtpegel je nachdem, ob momentan eine helle und dunkle Zone auf das Objekt trifft. Durch Zählen der Hell-Dunkel-Übergänge kann die relative Objektposition zum Fahrzeug ermittelt werden. In einer weiteren Ausführungsform werden mit Hilfe zweier Lichtsender unterschiedlicher Wellenlänge alternierende Fresnel-Ringe erzeugt und deren Übergänge ausgewertet.

Völlig unabhängig von den bisher diskutierten Technologien sind Drehgeber oder Inkrementalgeber bekannt, die aus zwei zueinander beweglichen Teilen zusammengesetzt sind. Mit dem einen Teil ist eine Abtasteinheit und mit dem zweiten Teil eine Maßverkörperung verbunden. Die Maßverkörperung weist Codespuren auf, und die Abtasteinheit erzeugt Abtastsignale durch Abtasten der Codespuren. Aus den Abtastsignalen kann auf die jeweilige Position der beiden Teile zueinander geschlossen werden.

Es ist daher Aufgabe der Erfindung, die sichere Funktionalität einer in der Sicherheitstechnik einsetzbaren Überwachungsvorrichtung zu erweitern.

Diese Aufgabe wird durch eine Überwachungsvorrichtung und ein Verfahren zur sicheren Objektverfolgung eines Objekts nach Anspruch 1 beziehungsweise 15 gelöst. Die Überwachungsvorrichtung weist mindestens einen ersten sicheren optoelektonischen Sensor und eine daran angeschlossene Sicherheitssteuerung auf. Mit Sicherheitssteuerung ist eine sichere Auswertungseinheit gemeint, die in beliebiger Hardware realisiert ist, insbesondere eine Sicherheitssteuerung als für Sicherheitsanwendungen zugelassene Steuerung im engeren Sinne. Sicher und Sicherheit bedeuten wie in der gesamten Beschreibung, dass Maßnahmen ergriffen sind, um Fehler bis zu einem spezifizierten Sicherheitsniveau zu beherrschen beziehungsweise Vorschriften einer einschlägigen Sicherheitsnorm für Maschinensicherheit oder berührungslos wirkende Schutzeinrichtungen einzuhalten, von denen einleitend einige genannt sind. Das bedeutet aber nicht zwingend, dass die Überwachungsvorrichtung in einer Sicherheitsapplikation eingesetzt ist, auch wenn sie es könnte. Beispielsweise ist denkbar, dass eine konkret vorgenommene Konfiguration keine normgerechte Sicherheit bietet, oder dass die Anwendung nur auf Beobachtung oder beispielsweise Absichern im Sinne von Diebstahlsicherung, nicht Schutz vor Verletzungsgefahren zielt. Nicht sicher ist der Gegenbegriff zu sicher, für nicht sichere Geräte, Übertragungswege, Auswertungen und dergleichen sind demnach die genannten Anforderungen an Fehlersicherheit nicht erfüllt.

Der erste sichere optoelektronische Sensor umfasst einen Lichtempfänger, der ein Empfangssignal aus Empfangslicht aus dem Überwachungsbereich erzeugt. Je nach Sensor ist das Empfangssignal beispielsweise das Signal einer Photodiode, die einen zurückkommenden Abtaststrahl empfängt, oder es sind Bilddaten eines Bildsensors verallgemeinernd als Empfangssignal bezeichnet. Der erste Sensor verfügt ferner über mindestens zwei sichere Ausgänge, insbesondere OSSDs, an denen jeweils ein vorzugsweise binäres sicheres Ausgangssignal ausgegeben werden kann. Die beiden sicheren Ausgänge sind vorzugsweise eigene physische Anschlüsse, können aber auch als Bit oder dergleichen einer komplexeren sicheren Ausgabe realisiert sein. Eine erste Steuer- und Auswertungseinheit des ersten Sensors ist für eine Schutzfeldüberwachung mit mindestens zwei Schutzfeldern ausgebildet, einem ersten Schutzfeld oder Schutzfeld A und einem zweiten Schutzfeld oder Schutzfeld B. Die Schutzfelder sind jeweils für sich konfigurierbare Teilbereiche des Überwachungsbereichs und tragen den historisch bedingten Namen Schutzfeld, obwohl es sich in Wahrheit je nach erstem Sensor um einen dreidimensionalen Raumbereich handeln kann. Ein Objekteingriff in das erste Schutzfeld führt zu einem sicheren Ausgangssignal an dem ersten sicheren Ausgang und entsprechend in das zweite Schutzfeld zu einem sicheren Ausgangssignal an dem zweiten sicheren Ausgang. Die Zugehörigkeit wird im Folgenden bisweilen dadurch ausgedrückt, dass die sicheren Ausgänge beispielhaft als OSSD A und OSSD B bezeichnet werden. Vorzugsweise sind OSSD A und B in dem Zustand An bei einem Objekt im zugehörigen Schutzfeld A beziehungsweise B und sonst in dem Zustand Aus. Die Sicherheitssteuerung ist dafür ausgebildet, die sicheren Ausgangssignale auszuwerten.

Die Erfindung geht von dem Grundgedanken aus, die beiden Schutzfelder in voneinander getrennte Teilschutzfelder zu unterteilen und damit eine feinere Ortsauflösung zu erhalten. Das bezieht sich zunächst nur auf eine Dimension, ist aber in noch zu beschreibenden Ausführungsformen auf zwei und bei Bedarf auch drei Dimensionen erweiterbar. Das erste und zweite Schutzfeld werden jeweils als mehrere Teilschutzfelder konfiguriert, und die Teilschutzfelder werden längs einer ersten Linie aufgereiht, und zwar derart, dass die Teilschutzfelder gleichsam ineinander verzahnt sind, also erste Teilschutzfelder des ersten Schutzfeld sich mit zweiten Teilschutzfeldern des zweiten Schutzfelds abwechseln. Dabei kann es jeweils Lücken und/oder einen Überlapp geben oder nicht.

Damit sind die zu einem selben Schutzfeld gehörigen Teilschutzfelder vorzugsweise nicht zusammenhängend. Die Abfolge ist vorzugsweise alternierend, d.h. folgt man der ersten Linie, so werden die beiden Schutzfelder nach dem Schema ..ABABABA.. verletzt. Wie noch zu erläutern sein wird, bilden die Schutzfelder eine Art Codespuren, und dabei sind komplexere Codeschemata vorstellbar, wobei ..ABBABAAB.. nur eines von unzähligen weiteren Beispielen ist. Ferner ist denkbar, mindestens ein weiteres Schutzfeld C, D ... hinzuzunehmen und damit mächtigere Codes zu bilden. Das alles ist an sich bekannt, beispielsweise von Drehgebern, und wird daher hier nicht im Detail, sondern am einfachen stellvertretenden Beispiel ..ABABABA.. beschrieben. Die erste Linie kann gekrümmt oder vorzugsweise gerade sein, erfindungsgemäß entspricht ein Teilschutzfeld einer diskreten Koordinate längs der Linie, wobei die Körnung durch Umschalten von Schutzfeldern etwas feiner sein kann, wie später erläutert.

Es ist zu betonen, dass erfindungsgemäß keineswegs nur eine Anzahl Positionen entsprechend der Anzahl Schutzfelder oder OSSDs unterschieden werden kann, wie bei den einleitend diskutierten herkömmlichen Lösungen. Erfindungsgemäß sind Schutzfelder frei konfigurierbar, mit jeweils im Prinzip beliebig vielen voneinander separierten und im Rahmen des Auflösungsvermögens des ersten Sensors beliebig kleinen Teilschutzfeldern beliebiger Form. Im Gegensatz zu einem separaten Schutzfeld sind Teilschutzfelder desselben Schutzfeldes voneinander abhängig. Eine Verletzung wird nur gemeinsam an dem entsprechenden sicheren Ausgang gemeldet, der erste Sensor liefert damit zunächst keine Information, in welchem Teilschutzfeld des betroffenen Schutzfeldes ein Objekteingriff stattgefunden hat. Die Erfindung ermöglicht aber durch die besondere Konfiguration der mindestens zwei Schutzfelder, dies herauszufinden.

Die Erfindung hat den Vorteil, dass eine diskrete sichere Objektverfolgung in einer Bewegungsrichtung, später auch in mehreren Bewegungsrichtungen mit deutlich erhöhter Auflösung realisiert werden kann, die nicht eng an die äußerst geringe Anzahl simultan überwachter Schutzfelder gebunden ist, sondern mit zwei Schutzfeldern je Bewegungsrichtung auskommt. Das nutzt die hohe Gestaltungsfreiheit bei der Konfiguration der Geometrie eines Schutzfeldes. Damit wird eine neue Sicherheitsfunktion erschlossen. Sie basiert auf der bereits sicheren Schutzfeldauswertung und den ebenfalls sicheren Ausgängen und erbt damit in gewissem Sinne die funktionale Sicherheit weitgehend ohne Zusatzaufwand. Die sichere diskrete Objektverfolgung kann als Plausibilisierung oder Validierung einer noch feineren nicht sicheren Objektverfolgungsfunktion verwendet werden, beispielsweise mit dem Konzept der einleitend diskutierten EP 3 709106 A1. Das Raster für die Validierung wird dort dank der Erfindung wesentlich feiner, so dass verbleibende mögliche Fehler der nicht-sicheren Objektverfolgungsfunktion eine deutlich niedrigere obere Schranke erhalten.

Die Sicherheitssteuerung ist bevorzugt dafür ausgebildet, eine zeitliche Abfolge der sicheren Ausgangssignale an dem ersten sicheren Ausgang und dem zweiten sicheren Ausgang auszuwerten, um eine Position des Objekts längs der ersten Linie zu bestimmen. Aus der zeitlichen Abfolge lässt sich erschließen, welches der Teilschutzfelder verletzt ist, und damit ergibt sich eine Position in der Auflösung der Teilschutzfelder, nicht lediglich der Schutzfelder.

Vorzugsweise bilden die ersten Teilschutzfelder eine erste Codespur und die zweiten Teilschutzfelder eine zweite Codespur. Damit soll eine Analogie zu Inkrementalgebern verdeutlicht werden. Die Teilschutzfelder und die Lücken dazwischen codieren für Eins und Null, und die Abtastung dieser besonderen Codespur erfolgt dadurch, dass ein sich bewegendes Objekt ein Teilschutzfeld betritt und wieder verlässt und entsprechend der zugehörige sichere Ausgang seine Zustände wechselt.

Vorzugsweise überlappen die ersten Teilschutzfelder und die zweiten Teilschutzfelder einander in Richtung der ersten Linie teilweise, insbesondere hälftig. Damit ergibt sich, wenn ein Objekt der ersten Linie folgt, die Verletzungssequenz ..A AB B.. Vorzugsweise ist längs der ersten Linie zwischen den Teilschutzfeldern jeweils ein Freibereich ohne Teilschutzfeld angeordnet. Das ergibt Verletzungssequenzen wie ...A(leer)B(leer)A.. oder ..AB(leer)AB.. Besonders bevorzugt sind Überlapp und Freibereich kumuliert, mit einer Verletzungssequenz ..A AB B (leer) A AB .. Der Freibereich kann so groß sein wie ein Teilschutzfeld und/oder deren gegenseitiger Überlapp. Eine andere bevorzugte Ausdehnung des Freibereichs misst sich daran, ob eine Person hineinpasst, ohne ein Schutzfeld auszulösen, und dies ergibt eine Größenordnung von 50 cm - 1 m, insbesondere 60 cm entsprechend der horizontalen Ausdehnung einer stehenden Person. Der Überlappungsbereich kann so groß sein wie der Freibereich, aber die eigentliche Forderung ist hier nur, dass bei Betreten des Überlappungsbereichs beide überlappenden Schutzfelder zuverlässig ausgelöst werden. Dafür genügt eine geringere Ausdehnung von beispielsweise 20 cm.

Die Sicherheitssteuerung ist bevorzugt dafür ausgebildet, die zeitliche Abfolge der sicheren Ausgangssignalen mit einem Inkrementalgeber-Verfahren für die Auswertung der Abtastsignale zweier zueinander versetzter Codespuren einer Maßverkörperung auszuwerten. Die Analogie zu einem Inkrementalgeber ist nicht nur eine Veranschaulichung, die sicheren Ausgangssignale haben einen gleichen Verlauf wie Abtastsignale eines Inkrementalgebers. Damit steht das gesamte mächtige Arsenal an Codierungen und Auswertungen zur Verfügung, das für Inkrementalgeber entwickelt wurde, damit an sich bekannt ist, und das erfindungsgemäß einsetzbar ist, ohne es hier im Einzelnen zu erläutern.

Die Sicherheitssteuerung ist bevorzugt dafür ausgebildet, eine Richtung der Bewegung des Objekts aus der zeitlichen Abfolge der sicheren Ausgangssignale zu bestimmen. Das funktioniert besonders zuverlässig mit der oben angegeben Anordnung von Teilschutzfeldern mit gegenseitigem Überlapp und Freiraum. Zeigen die sicheren Ausgangssignale .. A AB B (leer).., so hat sich das Objekt vorwärts, bei B AB A entsprechend rückwärts bewegt.

Die Sicherheitssteuerung weist bevorzugt einen Zähler auf, der entsprechend der Richtung der Bewegung bei Eintritt in ein Teilschutzfeld und Austritt aus einem Teilschutzfeld herauf- und heruntergezählt wird. In Kenntnis der jeweiligen Richtung kann die Position inkrementell mit einem Zähler erfasst werden. Es ist denkbar, Eingriffe in ein bestimmtes Schutzfeld in separaten Zählern zu erfassen, es genügt aber auch ein einziger Zähler, der nicht unterscheidet, welches Schutzfeld betroffen ist. Das ließe sich aus dem Zählerstand ohnehin zurückrechnen. Die reale Position auf der ersten Linie kann aus dem Zählerstand in Kenntnis der Schutzfeldgeometrie berechnet werden.

Die Sicherheitssteuerung ist bevorzugt dafür ausgebildet, ein sicheres Ausgangssignal an einem der sicheren Ausgänge erst dann als neues sicheres Ausgangssignal zu verarbeiten, wenn zwischenzeitlich an dem anderen sicheren Ausgang ein sicheres Ausgangssignal anliegt. Hiermit wird konkret ein Beispiel genannt, wie ein für Inkrementalgeber entwickeltes Vorgehen vorteilhaft auf die Erfindung übertragen werden kann. Inkrementalgeber neigen nämlich zum Prellen. Der Begriff stammt ursprünglich von einem Schalter oder Taster, der durch eine Fehlfunktion mehrfach kurz hintereinander auslöst. Vergleichbares kann passieren, wenn sich ein Objekt an einer Schutzfeldgrenze befindet. Die genannte Maßnahme dient zum Entprellen. Ein weitgehend ruhendes Objekt an der Schutzfeldgrenze löst nämlich beim Prellen immer nur wieder eine weitere Verletzung desselben Schutzfeldes aus, während ein sich bewegendes Objekt unweigerlich das andere Schutzfeld verletzen muss.

Die Teilschutzfelder weisen bevorzugt untereinander eine gleiche Form und/oder Größe auf. Das ergibt gleichsam einheitliche Codeelemente, die sowohl die Konfiguration als auch die Auswertung deutlich erleichtern und deren Fehleranfälligkeit erheblich reduzieren. Aus den gleichen Gründen haben die Teilschutzfelder vorzugsweise eine einfache Form, sind beispielsweise rechteckig beziehungsweise quaderförmig. Für das Funktionsprinzip notwendig ist diese Voraussetzung nicht.

Die Sicherheitssteuerung ist bevorzugt dafür ausgebildet, die Schutzfelder längs der ersten Linie zu verschieben, sobald ein sicheres Ausgangssignal an einem der sicheren Ausgänge anliegt. Damit verfolgen gleichsam die Teilschutzfelder das Objekt, das im Verlauf seiner Bewegung immer wieder die verschobene Schutzfeldgrenze durchbricht. Die Verschiebung erfolgt vorzugsweise um einen Bruchteil des Abstands zwischen zwei Teilschutzfeldern. Vorzugsweise ist eine Konfiguration mit gleich großen Teilschutzfeldern und Abständen entsprechend der Ausdehnung der Teilschutzfelder ..A(leer)B(leer).. vorgesehen. Das Verschieben erfolgt bevorzugt durch Umschaltung auf eine versetzte Anordnung der Schutzfelder. Die genannte bevorzugte Konfiguration lässt sich mit vier umschaltbaren Schutzfeldsätzen erreichen. Die Verschiebungen werden vorzugsweise gezählt, um so die Position inkrementell zu bestimmen.

Die Sicherheitssteuerung ist bevorzugt dafür ausgebildet, die Schutzfelder bei einem sicheren Ausgangssignal an dem ersten sicheren Ausgang in die eine Richtung und bei einem sicheren Ausgangssignal an dem zweiten sicheren Ausgang in die andere Richtung längs der ersten Linie zu verschieben. Dann dient das erste Schutzfeld der Erkennung einer Vorwärtsbewegung und das zweite Schutzfeld der Erkennung einer Rückwärtsbewegung längs der ersten Linie. Ein Zähler wird je nach Bewegungsrichtung herauf- oder heruntergezählt.

Der erste sichere optoelektronische Sensor ist vorzugsweise eine 3D-Kamera, insbesondere eine Lichtlaufzeitkamera. Damit lässt sich ein großer Überwachungsbereich erfassen, und die Konfiguration von Schutzfeldern und Teilschutzfeldern ist in einem feinen Raster möglich. Die 3D-Kamera, die ursprünglich nur für eine Schutzfeldauswertung ausgebildet ist, erhält durch die Erfindung die Zusatzfunktion einer sicheren Objektverfolgung. Der erste sichere optoelektronische Sensor kann alternativ ein Laserscanner sein, aber dies bedarf einer passenden Perspektive.

Die Sicherheitssteuerung ist bevorzugt dafür ausgebildet, eine Absicherung einer von der Überwachungsvorrichtung überwachten Maschine auszulösen, wenn sich das Objekt an einer gefährlichen Position und/oder in einer gefährlichen Bewegung befindet. Die Beurteilung, ob eine Objektposition oder Bewegung gefährlich ist, kann in einer nachgeordneten Recheneinheit erfolgen, die hier vereinfachend begrifflich der Sicherheitssteuerung zugeschlagen wird. Eine gefährliche Position kann zu nahe an einer Maschine oder einem Maschinenteil sein, mit möglichen Zeitabhängigkeiten oder der Berücksichtigung von Arbeitsabläufen der Maschine. Bewegungen ermöglichen zusätzliche Bewertungen, denn beispielsweise ist eine Bewegung parallel zu der Maschine oder sogar mit einer Teilkomponente davon weg unkritischer als direkt auf die Maschine zu. Auch die Geschwindigkeit kann eine Rolle spielen (Speed-and-Separation-Monitoring). Die Absicherung kann in einem Ausweichen, Verlangsamen oder Anhalten der Maschine oder dem Einnehmen eines sonstigen sicheren Zustands bestehen.

Die Überwachungsvorrichtung weist bevorzugt einen zweiten optoelektronischen Sensor mit einem zweiten Lichtempfänger, mindestens einem dritten sicheren Ausgang und einem vierten sicheren Ausgang sowie einer zweite Steuer- und Auswertungseinheit auf, die für eine Schutzfeldüberwachung mindestens eines dritten Schutzfeldes mit mehreren dritten Teilschutzfeldern und eines vierten Schutzfeldes mit mehreren vierten Teilschutzfeldern mit Ausgabe eines sicheren Ausgangssignals an dem dritten sicheren Ausgang oder dem vierten sicheren Ausgang bei Objekteingriff ausgebildet ist, wobei die dritten Teilschutzfelder und vierten Teilschutzfelder längs einer zweiten Linie quer zu der ersten Linie alternierend aufeinanderfolgend angeordnet sind und wobei insbesondere die Sicherheitssteuerung dafür ausgebildet ist, eine zeitliche Abfolge der sicheren Ausgangssignale an dem dritten sicheren Ausgang und dem vierten sicheren Ausgang auszuwerten, um eine Position des Objekts längs der zweiten Linie zu bestimmen. Der zweite optoelektronische Sensor ist also ebenfalls in der Lage, zwei Schutzfelder in Teilschutzfelder zu unterteilen und diese zu überwachen und entsprechende sichere Ausgangssignale bereitzustellen. Er entspricht damit dem ersten optoelektronischen Sensor jedenfalls hinsichtlich der erfindungswesentlichen Merkmale und ist bevorzugt funktions- oder sogar baugleich. Die beiden Sensoren überwachen Teilschutzfelder, die auf quer zueinander orientierten Linien aufgereiht sind. Dadurch wird eine Objektverfolgung in zwei Dimensionen ermöglicht. Die zweite Linie ist wie die erste Linie vorzugsweise gerade und noch bevorzugter senkrecht zu der ersten Linie orientiert. Das ergibt dann kartesische Koordinaten. Mindestens eine Linie kann gekrümmt sein, woraus sich dann entsprechend verzerrte Koordinaten ergeben, die in Kenntnis der Schutzfeldgeometrie jederzeit in kartesische Koordinaten transformierbar sind. Durch Hinzufügen eines dritten optoelektronischen Sensors mit einem fünften und sechsten Schutzfeld mit Teilschutzfeldern längs einer dritten Linie quer zu den beiden anderen Linien ist eine Erweiterung der Objektverfolgung in die dritte Dimension möglich.

Die erste Steuer- und Auswertungseinheit ist bevorzugt dafür ausgebildet, die Schutzfeldüberwachung auf ein drittes Schutzfeld mit mehreren dritten Teilschutzfeldern und ein viertes Schutzfeld mit mehreren vierten Teilschutzfeldern umzuschalten, wobei die dritten Teilschutzfelder und vierten Teilschutzfelder längs einer zweiten Linie quer zu der ersten Linie alternierend aufeinanderfolgend angeordnet sind, und wobei insbesondere die Sicherheitssteuerung dafür ausgebildet ist, eine zeitliche Abfolge der sicheren Ausgangssignale auszuwerten, um eine Position des Objekts längs der zweiten Linie zu bestimmen. Verletzungen des dritten und vierten Schutzfeldes führen vorzugsweise zu einem entsprechenden sicheren Ausgangssignal an dem ersten beziehungsweise zweiten sicheren Ausgang. Das Umschalten erfolgt vorzugsweise sehr schnell (Togglen) und insbesondere schneller als eine aus dem Sicherheitskonzept geforderte Ansprechzeit der Schutzfelder, so dass effektiv alle Schutzfelder simultan überwacht werden. Das ist eine Alternative zu der Ausführungsform des Vorabsatzes, die den zweiten sicheren optoelektronischen Sensor durch das Umschalten emuliert, so dass nur ein Sensor benötigt wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer 3D-Lichtlaufzeitkamera;
- Fig. 2: eine schematische Darstellung einer Überwachungsvorrichtung mit zwei Kameras und einer Sicherheitssteuerung;
- Fig. 3: eine beispielhafte Tiefenkarte mit zwei Schutzfeldern;
- Fig. 4a: eine alternative Darstellung der Schutzfelder aus Figur 3 und im unteren Teil einen Signalverlauf an zugeordneten sicheren Ausgängen während einer Objektbewegung durch die Schutzfelder;
- Fig. 4b: eine Darstellung gemäß Figur 4a bei Objektbewegung in umgekehrter Richtung;
- Fig. 5: eine beispielhafte Tiefenkarte ähnlich Figur 3 nun mit mehreren Teilschutzfeldern;
- Fig. 6: eine alternative Darstellung der Schutzfelder aus Figur 5 und im unteren Teil einen Signalverlauf an zugeordneten sicheren Ausgängen während einer Objektbewegung durch die Schutzfelder;
- Fig. 7: eine schematische Darstellung zweier zueinander gekreuzt angeordneter Paare von Schutzfeldern für eine Objektverfolgung nun in zwei Dimensionen;
- Fig. 8: eine beispielhafte Tiefenkarte mit Schutzfeldern, die in einer weiteren Ausführungsform verschoben werden;
- Fig. 9: eine alternative Darstellung der Schutzfelder aus Figur 8 mit Illustration der Umschaltung von Schutzfeldern bei einem Schutzfeldeingriff durch ein sich bewegendes Objekt; und
- Fig. 10: eine schematische Darstellung von vier Schutzfeldsätzen, zwischen denen bei einer Objektbewegung zyklisch umgeschaltet wird.

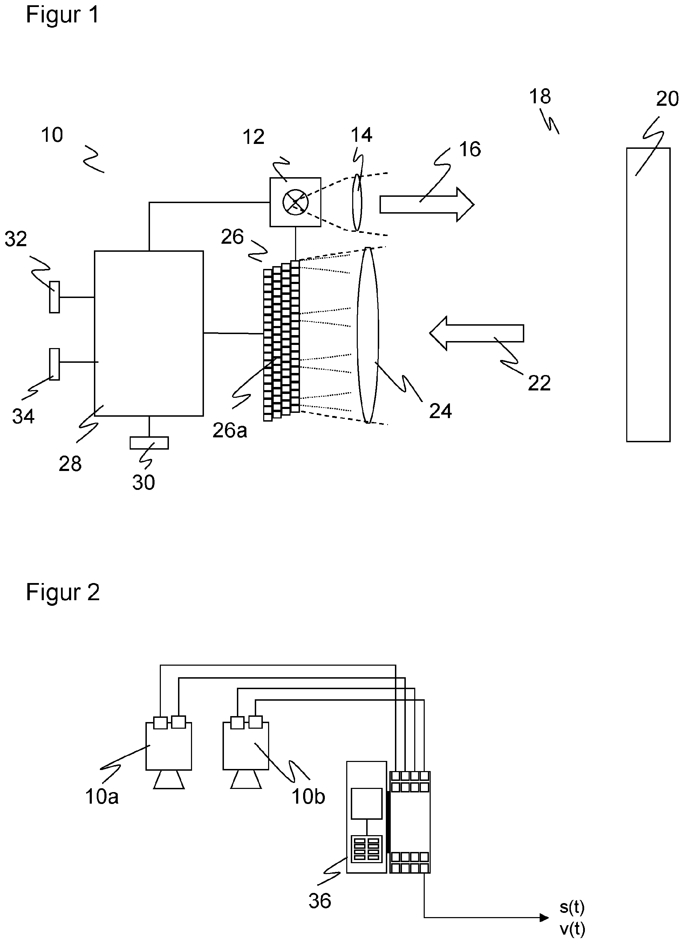

Figur 1 zeigt eine schematische Blockdarstellung einer Kamera 10, die vorzugsweise als 3D-Lichtlaufzeitkamera ausgebildet ist und die stellvertretend für einen optoelektronischen Sensor beschrieben wird, der im Zusammenhang mit der Erfindung eingesetzt werden kann. Eine Beleuchtungseinheit 12 sendet durch eine Sendeoptik 14 moduliertes Sendelicht 16 in einen Überwachungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation. Durch die Frequenz entsteht ein begrenzter Eindeutigkeitsbereich der Abstandsmessung, so dass für große Reichweiten der Kamera 10 kleine Modulationsfrequenzen erforderlich sind. Alternativ werden Messungen bei zwei bis drei oder mehr Modulationsfrequenzen durchgeführt, um in Kombination der Messungen den Eindeutigkeitsbereich zu vergrößern.

Trifft das Sendelicht 16 in dem Überwachungsbereich 18 auf ein Objekt oder eine Person 20, so wird ein Teil als Empfangslicht 22 zu der Kamera 10 zurückgeworfen und dort durch eine Empfangsoptik 24, beispielsweise eine Einzellinse oder ein Empfangsobjektiv, auf einen Bildsensor 26 geführt. Der Bildsensor 26 weist eine Vielzahl von beispielsweise zu einer Matrix oder Zeile angeordneten Empfangselementen oder Empfangspixeln 26a auf. Die Auflösung des Bildsensors 26 kann von zwei oder einigen wenigen bis hin zu tausenden oder Millionen Empfangspixeln 26a reichen. Darin findet eine Demodulation entsprechend einem Lock-In-Verfahren statt. Durch wiederholte Erfassung mit über die Wiederholungen jeweils geringfügig versetzter Modulation des Sendelichts 16 werden mehrere Abtastwerte erzeugt, aus denen sich letztlich die Phasenverschiebung zwischen Sendelicht 16 und Empfangslicht 22 und damit die Lichtlaufzeit messen lässt. Die Pixelanordnung ist typischerweise eine Matrix, so dass sich eine laterale Ortsauflösung in einer X-Richtung und einer Y-Richtung ergibt, was sich mit der Z-Richtung der Abstandsmessung zu den dreidimensionalen Bilddaten ergänzt. Diese 3D-Erfassung ist vorzugsweise gemeint, wenn von einer 3D-Kamera, einer 3D-Lichtlaufzeitkamera oder dreidimensionalen Bilddaten gesprochen wird. Prinzipiell sind aber auch andere Pixelanordnungen denkbar, etwa eine Pixelzeile, die in einer Matrix ausgewählt wird oder die den ganzen Bildsensor einer Zeilenkamera bildet.

In einer Steuer- und Auswertungseinheit 28 mit mindestens einem digitalen Rechenbaustein wie einem Mikroprozessor oder dergleichen sind mindestens zwei Schutzfelder konfiguriert. Das sind geometrische Vorgaben für einen Teilbereich des Überwachungsbereichs 18, die beispielsweise in einem CAD-Programm oder auf beliebig andere Weise mittels der Steuer- und Auswertungseinheit 28 konfiguriert oder über eine Schnittstelle 30 eingespielt werden. Die Schutzfelder werden auf Objekteingriffe überwacht, und bei einer Schutzfeldverletzung wird an einem dem Schutzfeld zugeordneten sicheren Ausgang 32, 34 ein sicheres Ausgangssignal ausgegeben. Der Zustand des sicheren Ausgangs reflektiert demnach binär die Anwesenheit oder Abwesenheit eines Objekts im zugehörigen Schutzfeld. Die beiden Schutzfelder werden im Folgenden als Schutzfeld A und B bezeichnet, demensprechend der zugehörige sichere Ausgang 32, 34 als OSSD A und OSSD B. Die Kamera 10 und insbesondere die Schutzfeldauswertung samt der Ausgangssignale oder OSSD-Zustände sind sicher im einleitend definierten Sinne.

Figur 2 zeigt eine schematische Darstellung einer Überwachungsvorrichtung mit zwei Kameras 10a-b und einer Sicherheitssteuerung 36, die beispielsweise an einer Kreuzung oder im Zusammenhang mit der Steuerung eines Roboters zum Einsatz kommen kann. In einer alternativen Ausführungsform ist nur eine Kamera vorgesehen, wobei auch andere optoelektronische Sensoren möglich sind, insbesondere ein Laserscanner.

Die nun zu beschreibende Auswertung der OSSD-Zustände erfolgt in einer Sicherheitssteuerung 36, wobei dies zunächst allgemein als sichere Auswertung einer Recheneinheit in beliebiger Hardware und nur vorzugsweise als Sicherheitssteuerung im engeren Sinne zu verstehen ist. Die Sicherheitssteuerung 36 führt eine sichere Objektverfolgung durch, deren Ergebnis beispielsweise sichere Werte für die Position, gegebenenfalls auch Geschwindigkeit zu einem jeweiligen Zeitpunkt sind. Dies wiederum kann in einer nicht dargestellten übergeordneten Auswertung, die alternativ ebenfalls noch in der Sicherheitssteuerung 36 implementiert ist, für eine Gefährdungsbeurteilung verwendet werden. Wird eine Gefahr erkannt, so wird ein sicherheitsgerichtetes Signal an eine überwachte Maschine oder einen Roboter ausgegeben. Die Maschine oder der Roboter wird daraufhin langsamer oder weicht auf Arbeitsschritte aus, die zumindest bei dieser erkannten Objektbewegung nicht gefährden können, und nur notfalls wird die Maschine in einen sicheren Zustand überführt. Damit wird insgesamt eine hohe Verfügbarkeit und Produktivität erzielt.

Eine sichere Objektverfolgung ist eine wichtige Grundfunktion für verschiedenste Automatisierungsanwendungen in Fertigung und Logistik, etwa wenn ein Fahrzeug einer Person ausweichen und nicht einfach anhalten soll. Gleichermaßen sollen Roboter die Kenntnis über die genaue Position einer Person in der Nähe dazu nutzen, um auf andere Arbeitsbereiche auszuweichen und die produktiven Prozesse aufrecht zu erhalten. Zukünftige Absicherungslösungen, die auf übergeordneter Ebene Einfluss auf die automatischen Prozesse in einem größeren Bereich bis hin zu einer ganzen Halle oder Fabrik nehmen, sind ebenfalls auf die Kenntnis der Positionen aller Personen angewiesen.

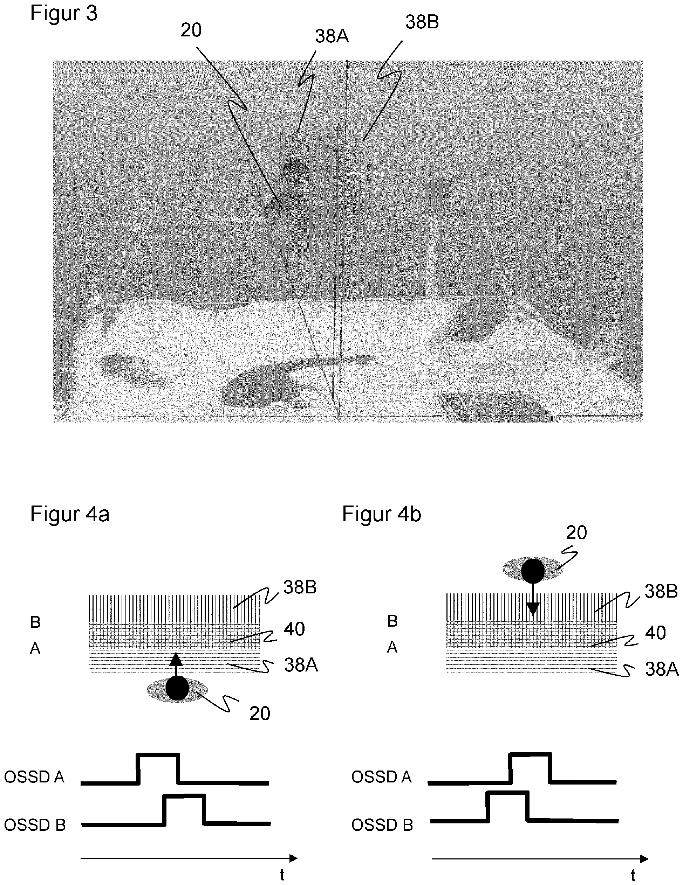

Figur 3 zeigt eine beispielhafte Tiefenkarte mit zwei Schutzfeldern. Entsprechend einer Aufnahmeperspektive von oben sind Teile des Bodens und der obere Teil des Körpers einer Person 20 als 3D-Punktwolke aufgenommen. In Kopfhöhe sind zwei einander überlappende Schutzfelder 38A-B konfiguriert. Figur 4a zeigt im oberen Teil eine alternative Darstellung der Schutzfelder 38A-B aus einer Draufsicht und im unteren Teil einen zeitlichen Signalverlauf an den zugehörigen sicheren Ausgängen 32, 34, die mit OSSD A und OSSD B bezeichnet sind, während einer Bewegung der Person 20 durch die Schutzfelder 38A-B, im Folgenden kurz Schutzfelder A und B. Figur 4b zeigt dies bei einer Bewegung der Person 20 in umgekehrter Richtung.

Die Schutzfelder A und B können als Codeelemente einer Codespur eines Inkrementalgebers verstanden werden. Ein Inkrementalgeber dient dazu, eine lineare Bewegung oder eine Drehbewegung in diskreten Schritten zu messen. Er verwendet dazu mindestens zwei getrennten Codespuren mit inkrementellen Codeelementen, die bei Bewegung jeweils ein binäres periodisches Signal erzeugen. Die Signale beider Codespuren sind zueinander phasenverschoben, was die Bestimmung der Bewegungsrichtung ermöglicht. Das Prinzip lässt sich auf eine diskrete Objektverfolgung mit einem optischen Sensor und einer Schutzfeldüberwachung übertragen. Bei einem Inkrementalgeber erzeugt die Abtastung eines jeweiligen Codeelements einen Puls im Abtastsignal. Ganz analog erzeugt die Bewegung der Person 20 durch ein Schutzfeld A beziehungsweise B einen vorübergehenden An-Zustand am zugehörigen OSSD A beziehungsweise B, der ebenfalls pulsförmig ist.

Wie in Figur 4a zu erkennen, wird bei einer Bewegung in der einen Bewegungsrichtung, hier nach oben, zunächst Schutzfeld A und dann kurz danach Schutzfeld B ausgelöst. Dementsprechend ergeben sich an OSSD A und OSSD B kurz hintereinander zwei Pulse. Bei umgekehrter Bewegungsrichtung gemäß Figur 4b ist das zeitliche Verhalten umgekehrt. Die Überlappung liefert eine zusätzliche Konsistenzbedingung: Es muss immer einen Zwischenzustand geben, in dem beide Schutzfelder A und B verletzt sind und damit zugleich an beiden OSSDs A und B ein Puls anliegt. Mit der Konstellation der Figuren 3 und 4a-b lässt sich zunächst nur die Bewegungsrichtung der Durchdringung dieses Paares von Schutzfeldern A und B bestimmen. Da die Schutzfeldauswertung sicher ist, ist die Information, auf welcher Seite der Schutzfelder A, B sich die Person 20 befindet, sicher verfügbar. Die Konstellation der Figuren 3, 4a-b entspricht aber auch nur einem einzigen Codeelement oder Inkrement eines Inkrementalgebers.

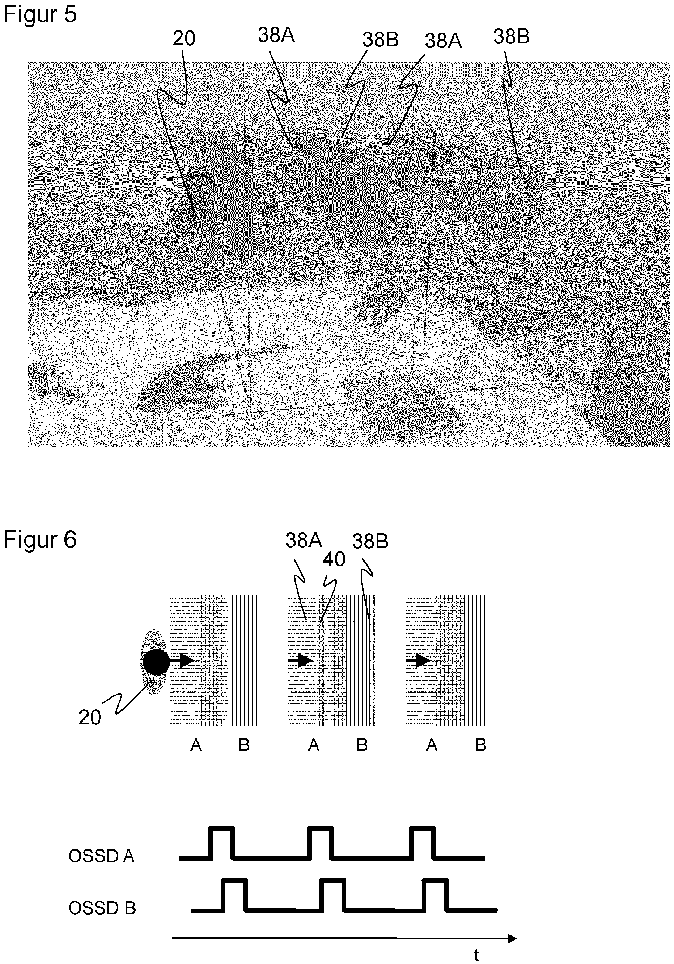

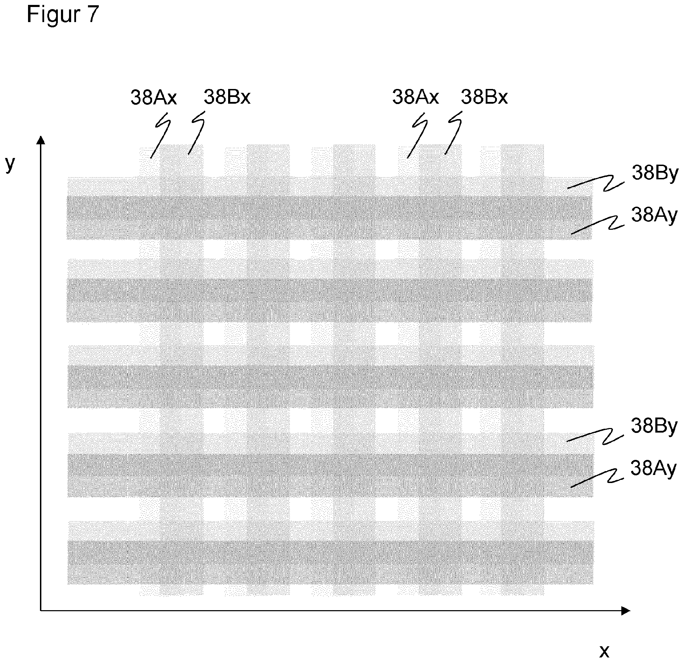

Figur 5 zeigt eine beispielhafte Tiefenkarte ähnlich Figur 3 nun mit mehreren Teilschutzfeldern. Damit wird ausgenutzt, dass die Schutzfelder 38A-B nahezu beliebig konfiguriert werden können. Im Sinne der Schutzfeldauswertung gibt es nach wie vor nur die beiden Schutzfelder A und B. Allerdings ist jedes der Schutzfelder A und B nun in eine Vielzahl von nicht zusammenhängenden Teilschutzfeldern unterteilt, wobei die Teilschutzfelder alternierend längs einer Linie aufgereiht sind. Damit wird eine Objekt- oder Bewegungsverfolgung längs der Linie und damit in einer Dimension ermöglicht. In einer weiteren Ausführungsform, die später unter Bezugnahme auf die Figur 7 beschrieben wird, kann dies auf zwei oder drei Dimensionen erweitert werden.

Figur 6 zeigt im oberen Teil die in Teilschutzfelder unterteilten Schutzfelder A und B der Figur 5 nochmals aus der Draufsicht und im unteren Teil einen Signalverlauf an OSSD A und OSSD B, während sich eine Person 20 in der angezeigten Richtung durch die Schutzfelder bewegt. Die periodische Fortsetzung der Konstellation aus den Figuren 3, 4a-b erweitert einzelne Codeelemente zu einer Codespur. Die Person 20 erzeugt mit ihrer Bewegung durch die Schutzfelder A und B und deren Teilschutzfelder eine Folge von Pulspaaren. Ein solcher Signalverlauf entspricht den Abtastsignalen eines Inkrementalgebers. Es wurde schon zu Figur 4a-b erläutert, wie jedes Pulspaar ausgewertet werden kann, um sicher die Bewegungsrichtung zu bestimmen. Mit Hilfe eines Zählers und der Teilschutzfelder kann die lineare Bewegung der Person 20 gemessen werden. Bei einer Bewegung in der einen Richtung, hier beispielsweise links nach rechts, wird der Zähler heraufgezählt, entsprechend bei einer Bewegung in der Gegenrichtung heruntergezählt. Der Zählerwert kann unter Verwendung der konkreten Schutzfeldgeometrie in eine diskrete lineare Position umgerechnet werden. Eine Initialisierung des Zählers ist unproblematisch, solange Personen 20 nur entweder von links oder von rechts in den Bereich der Schutzfelder A und B gelangen können und mit der Bewegungsrichtung auch zwischen rechts und links unterschieden werden kann. Für den eindimensionalen Fall können dafür noch bauliche oder sonstige Maßnahmen erforderlich sein, damit eine Person 20 nicht seitlich eindringt. In der späteren zweidimensionalen Erweiterung entfällt auch das, weil eine Person 20 nicht mitten in einem Raum entsteht. Es ist hier lediglich ein Protokoll beim Aktivieren und Freigeben des Systems erforderlich, damit sich anfänglich keine Person 20 in oder zwischen den Schutzfeldern aufhält, aber das sind in der Sicherheitstechnik gängige Maßnahmen.

Da die Schutzfeldauswertung und die Signale an den OSSDs im Sinne der funktionalen Sicherheit verlässlich sind, muss lediglich noch die einfache binäre Zählerauswertung unter den Vorgaben der funktionalen Sicherheit realisiert werden. Dafür genügt schon eine Sicherheitssteuerung 36 mit sehr moderater Leistungsfähigkeit. Der resultierende Zählerstand kann mit Hilfe interner Logikoperationen ausgewertet und seinerseits als Steuersignal für eine Maschine verwendet werden. Damit kann insbesondere eine Maschine oder ein Roboter zu geeigneten Maßnahmen veranlasst werden, die eine Gefährdung ausschließen, bis hin zu einem völligen Abbremsen oder einer Abschaltung. Die sichere Positionsinformation oder Objektverfolgung kann aber auch deutlich komplexer ausgewertet werden, beispielsweise indem die geeignete Sicherheitsmaßnahme von den Trajektorien, womöglich auch Geschwindigkeiten und Beschleunigungen, überwachter Personen oder dem Maschinenzustand abhängt.

Die Bewegungsverfolgung in Analogie zu einem Inkrementalgeber wurden an einer sehr einfachen Konstellation mit regelmäßigen, gleichartigen, alternierenden und überlappenden Teilschutzfeldern beschrieben. Es sind von Inkrementalgebern zahlreiche andere Codierungen und Auswertungen bekannt. Solche Codespuren lassen sich mit Teilschutzfeldern nachahmen, und auf die entsprechenden Signale an den OSSDs kann dann das Auswertungsverfahren des Inkrementalgebers angewandt werden. Das betrifft insbesondere die Robustheit der Auswertung. Als ein Beispiel sei ein Entprellen des Umschaltens genannt. Beim Prellen befindet sich die Person 20 an einer Schutzfeldgrenze und löst durch kleine Bewegungen das Schutzfeld immer wieder aus. Eine Möglichkeit des Entprellens besteht darin zu verlangen, dass nach einem Schutzfeldeingriff in das Schutzfeld A zunächst ein Schutzfeldeingriff in das Schutzfeld B erfolgen muss und umgekehrt, ansonsten wird der Schutzfeldeingriff ignoriert. Inkrementalgeber kennen aber noch aufwändigere Verfahren zum Entprellen.

Figur 7 zeigt eine schematische Darstellung zweier zueinander gekreuzt angeordneter Paare von Schutzfeldern 38Ax, 38Bx, 38Ay, 38By für eine Objektverfolgung nun in zwei Dimensionen. Damit ist die bisher erläuterte Schutzfeldkonfiguration verdoppelt, wobei ein Paar Schutzfelder 38Ax, 38Bx für die eine Bewegungsrichtung oder Dimension und das andere Paar Schutzfelder 38Ay, 38By für die andere Bewegungsrichtung oder Dimension zuständig ist. Außerdem ist vorzugsweise die jeweilige Breite angepasst, damit der flächige Bereich durch das entstehende Raster von Teilschutzfeldern abgedeckt ist.

In einer Richtung, also X oder Y, läuft die Bewegungsverfolgung so ab wie beschrieben. Es müssen nun lediglich zwei Zähler, jeweils einer pro Richtung oder Dimension, die Positionen entlang ihrer jeweiligen Richtung durch Herauf- oder Herabzählen verfolgen. Die Orientierung der beiden Schutzfeldpaare 38Ax, 38Bx, 38Ay, 38By ist vorzugsweise senkrecht zueinander, schiefe Koordinaten ließen sich aber in Kenntnis der Schutzfeldgeometrie ganz analog behandeln. Das gilt im übrigen auch für gekrümmte Teilschutzfelder beziehungsweise gekrümmte Linien, längs derer sie aufgereiht sind, dann ist eine entsprechende Koordinatentransformation in kartesische Koordinaten in Kenntnis der Schutzfeldgeometrie möglich.

Das zusätzliche Schutzfeldpaar kann dadurch überwacht werden, dass dafür ein zweiter Sensor verwendet wird, wie dies in Figur 2 schon dargestellt ist. Alternativ bleibt es bei einem einzigen Sensor, der seine Schutzfelder schnell zeitlich zwischen den Konfigurationen für eine jeweilige Richtung umschaltet ("Toggeln"). Zu beachten ist, dass es zu Schwierigkeiten kommen kann, wenn sich mehr als eine Person in dem durch die Schutzfelder abgedeckten Bereich aufhält. Mit den wenigen, im Ausführungsbeispiel vier Schutzfeldern ist hier keine eindeutige Zuweisung eines Schutzfeldeingriffs zu einer der Personen möglich. Allerdings wird es dann sehr schnell zu Signalverläufen an den OSSDs kommen, die eine einzelne Person nicht auslösen könnte. Das System ist also zwar nicht in der Lage, mehrere Personen zu tracken, sehrwohl aber, den Fehlerzustand mit mehreren Personen zu erkennen und gegebenenfalls eine Sicherheitsmaßnahme einzuleiten. Diese Sicherheitsmaßnahme kann in der Umschaltung auf ein herkömmliches Schutzfeld bestehen, das nur die eigentliche Gefahrenquelle absichert und keine sichere Objektverfolgung leisten kann.

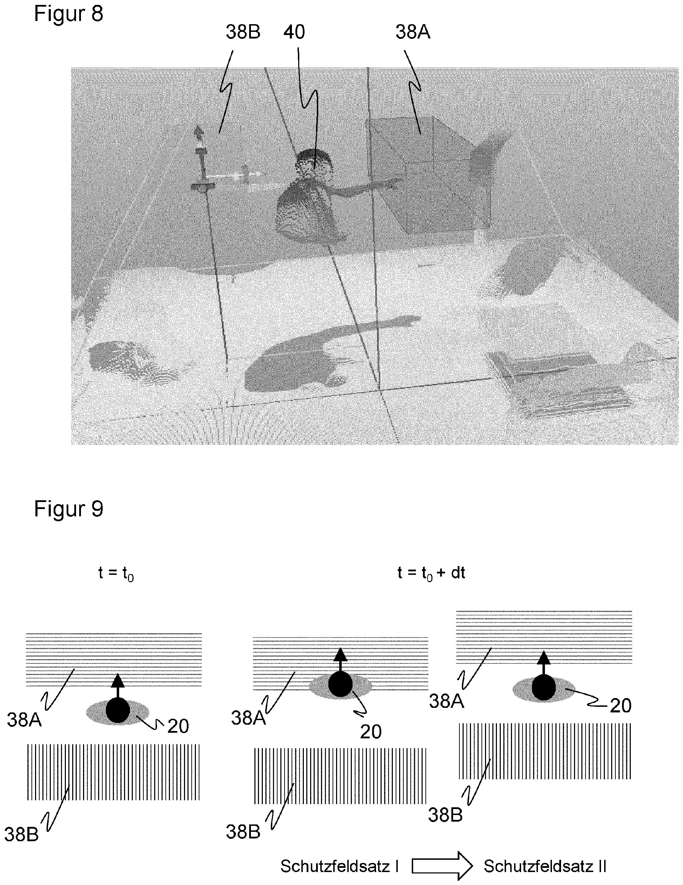

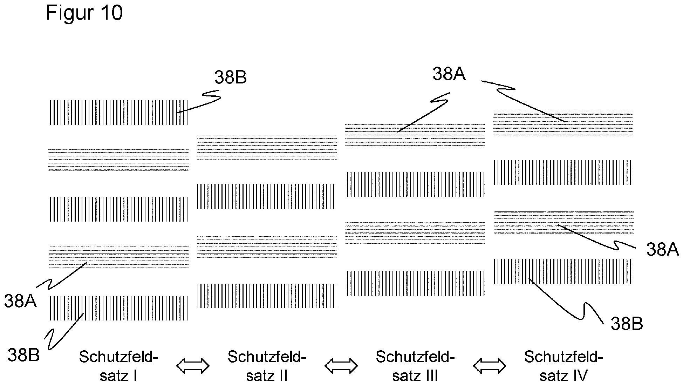

Figur 8 zeigt zur Erläuterung einer weiteren Ausführungsform eine beispielhafte Tiefenkarte mit einer Person 20 und Schutzfeldern 38A-B. In dieser Ausführungsform werden die Schutzfelder 38A-B synchron mit der Bewegung umgeschaltet. Figur 9 zeigt die Schutzfelder 38A-B der Figur 8 nochmals in einer Draufsicht in drei verschiedenen Stadien einer Bewegung. Es sind nur zwei Teilschutzfelder dargestellt, dies wird dann später mit Figur 10 analog zum bisherigen Vorgehen periodisch mit einer Vielzahl solcher Teilschutzfelder fortgesetzt.

Links in Figur 9 befindet sich zu einem Zeitpunkt t=t₀ eine Person 20 zwischen zwei Teilschutzfeldern der Schutzfelder 38A-B. Ein Zähler für die Position befindet sich in einem Zustand n. Die beiden Teilschutzfelder gehören zu unterschiedlichen Schutzfeldern 38A-B, um zwischen einer Vorwärts- und Rückwärtsbewegung unterscheiden zu können. In der Mitte der Figur 9 hat sich die Person 20 zu einem Zeitpunkt t=t₀+dt vorwärts in das Teilschutzfeld des Schutzfeldes 38A bewegt. Der Zähler für die Position wird entsprechend auf n+1 heraufgezählt. Rechts in Figur 9 werden daraufhin die Schutzfelder auf eine andere Konfiguration umgeschaltet, in der die Teilschutzfelder leicht versetzt nach oben verschoben sind. Dadurch ist die Schutzfeldverletzung aufgehoben. Bei fortgesetzter Bewegung wird erneut das Schutzfeld 38A für die Vorwärtsbewegung verletzt, der Zähler auf n+2 heraufgezählt und ein weiteres Mal auf einen leicht nach oben versetzten Schutzfeldsatz umgeschaltet. Bei einer jeweiligen Rückwärtsbewegung erfolgt eine entsprechend umgekehrte Schutzfeldumschaltung mit einem nach unten versetzten Schutzfeldsatz, und der Zähler für die Position wird um eins herabgezählt.

Figur 10 zeigt eine schematische Darstellung von vier Schutzfeldsätzen, zwischen denen bei einer Objektbewegung zyklisch umgeschaltet wird. Bei diesen Schutzfeldsätzen ist die Ausdehnung in der überwachten Bewegungsrichtung für die Teilschutzfelder und die Lücken dazwischen jeweils gleich, und der Versatz erfolgt um die Hälfte dieser gemeinsamen Ausdehnung. Dadurch ist der Zyklus nach vier Umschaltungen geschlossen, wobei gegebenenfalls bei der Umschaltung zwischen dem ersten und letzten Schutzfeldsatz am Ende eines Zyklus' noch die Rollen für vorwärts und rückwärts, d.h. Schutzfeld A und B, getauscht werden können. Die Darstellung der Figur 10 ist beispielhaft, es sind viele alternative Schutzfeldsätze denkbar, mit denen durch automatische Umschaltung auf leicht versetzte Teilschutzfelder ein Zähler für die Position und damit eine sichere Objektverfolgung umgesetzt werden kann.

Die alternative Ausführungsform mit Umschaltung auf versetzte Schutzfelder ist analog den Erläuterungen zu Figur 7 auf den mehrdimensionalen Fall erweiterbar. Sie hat einen etwas höheren Realisierungsaufwand, da mehrere Schutzfeldsätze konfiguriert werden müssen, wobei sich dies durch zumindest teilautomatisierte Unterstützung zumindest auf Seiten des Anwenders deutlich vereinfachen lässt. Auch die erforderlichen schnellen zeitlichen Umschaltungen zwischen Schutzfeldsätzen führt zu einem gewissen Mehraufwand beziehungsweise höheren Anforderungen an die Hardware und den Sensor.

In allen Ausführungsformen kann es sinnvoll sein, mehrere Sensoren einzusetzen. Zum einen lässt sich auf diese Weise insgesamt ein größerer Überwachungsbereich 18 erfassen. Mehrere Sensoren dienen alternativ oder zusätzlich einer Rasterauflösung. Die Auflösung der Objektverfolgung ist durch eine Mindestgröße und einen Mindestabstand von Teilschutzfeldern begrenzt. Das hat sicherheitstechnische Gründe, die eine sichere Schutzfeldauswertung in Abhängigkeit von der originären Sensorauflösung nur für Schutzfelder einer gewissen Auflösung zulassen, beispielsweise eine Mindestgröße von 30 cm und einen Mindestabstand von 50 cm. Durch leicht zueinander versetzte Schutzfelder zweier oder mehrerer Sensoren kann eine insgesamt höhere Auflösung erreicht werden. Hier gibt es wiederum eine Analogie zu Inkrementalgebern mit mehr als zwei Codespuren. Von Inkrementalgebern sind auch Anordnungen der Codeelemente und Auswertungen von deren Abtastsignalen bekannt, die sich auf Teilschutzfelder und eine Auswertung von zugehörigen OSSD-Signalen übertragen lassen und die robuster und/oder besser aufgelöst sind als naive Ansätze.

Die beschriebene 3D-Kamera 10, insbesondere TOF-Kamera, ist besonders geeignet für die erfindungsgemäße sichere Objektverfolgung. Andere Sensoren sind aber auch möglich, insbesondere ein Sicherheitslaserscanner. Damit sind dann gewisse Einschränkungen beispielsweise durch Randbedingungen an die Anwendungsgeometrie hinzunehmen. Die Bewegung sollte vorzugsweise senkrecht zur Strahlrichtung des Sicherheitsscanners erfolgen und durch eine entsprechende Anordnung von zweidimensionalen, überlappenden Schutzfeldern verfolgt werden.

## Patentansprüche

1. Überwachungsvorrichtung zur sicheren Objektverfolgung eines Objekts (20) in einem Überwachungsbereich (18) mit mindestens einem ersten sicheren optoelektronischen Sensor (10, 10a) und einer an den ersten optoelektronischen Sensor (10, 10a) angeschlossenen Sicherheitssteuerung (36), wobei der erste optoelektronische Sensor (10, 10a) einen ersten Lichtempfänger (26) zum Erzeugen eines Empfangssignals aus Empfangslicht (22) aus dem Überwachungsbereich (18), mindestens einen ersten sicheren Ausgang (32) und einen zweiten sicheren Ausgang (34) jeweils zur Ausgabe eines sicheren Ausgangssignals sowie eine erste Steuer- und Auswertungseinheit (28) aufweist, die dafür ausgebildet ist, anhand des Empfangssignals mindestens ein erstes Schutzfeld (38A) und ein zweites Schutzfeld (38B) in dem Überwachungsbereich (18) sicher auf Objekteingriffe zu überwachen und bei einem Objekteingriff in das erste Schutzfeld (38A) ein sicheres Ausgangssignal an dem ersten sicheren Ausgang (32) und bei einem Objekteingriff in das zweite Schutzfeld (38B) ein sicheres Ausgangssignal an dem zweiten sicheren Ausgang (34) auszugeben, wobei die Sicherheitssteuerung (36) dafür ausgebildet ist, die sicheren Ausgangssignale auszuwerten, wobei die Begriffe "sicher" und "Sicherheit" bedeuten, dass Maßnahmen ergriffen sind, um Fehler bis zu einem spezifizierten Sicherheitsniveau zu beherrschen und Vorschriften einer Sicherheitsnorm für Maschinensicherheit oder berührungslos wirkende Schutzeinrichtungen einzuhalten und wobei das erste Schutzfeld (38A) und das zweite Schutzfeld (38B) jeweils ein mittels geometrischer Vorgaben in der ersten Steuer- und Auswertungseinheit (28) konfigurierter oder über eine Schnittstelle (30) eingespielter Teilbereich des Überwachungsbereichs (18) ist, wobei das erste Schutzfeld (38A) mehrere erste Teilschutzfelder und das zweite Schutzfeld (38B) mehrere zweite Teilschutzfelder aufweist und wobei **dass** die ersten Teilschutzfelder und die zweiten Teilschutzfelder längs einer Linie abwechselnd aufeinanderfolgend angeordnet sind.

2. Überwachungsvorrichtung nach Anspruch 1,
wobei die Sicherheitssteuerung (36) dafür ausgebildet ist, eine zeitliche Abfolge der sicheren Ausgangssignalen an dem ersten sicheren Ausgang (32) und dem zweiten sicheren Ausgang (34) auszuwerten, um eine Position des Objekts (20) längs der ersten Linie zu bestimmen.

3. Überwachungsvorrichtung nach Anspruch 1 oder 2,
wobei die ersten Teilschutzfelder eine erste Codespur und die zweiten Teilschutzfelder eine zweite Codespur bilden.

4. Überwachungsvorrichtung nach einem der vorhergehenden Ansprüche,
wobei die ersten Teilschutzfelder und die zweiten Teilschutzfelder einander in Richtung der ersten Linie teilweise überlappen, insbesondere hälftig, und/oder wobei längs der ersten Linie zwischen den Teilschutzfeldern jeweils ein Freibereich ohne Teilschutzfeld angeordnet ist.

5. Überwachungsvorrichtung nach einem der vorhergehenden Ansprüche,
wobei die Sicherheitssteuerung (36) dafür ausgebildet ist, die zeitliche Abfolge der sicheren Ausgangssignalen mit einem Inkrementalgeber-Verfahren für die Auswertung der Abtastsignale zweier zueinander versetzter Codespuren einer Maßverkörperung auszuwerten.

6. Überwachungsvorrichtung nach einem der vorhergehenden Ansprüche,
wobei die Sicherheitssteuerung (36) dafür ausgebildet ist, eine Richtung der Bewegung des Objekts (20) aus der zeitlichen Abfolge der sicheren Ausgangssignale zu bestimmen und wobei insbesondere die Sicherheitssteuerung (36) einen Zähler aufweist, der entsprechend der Richtung der Bewegung bei Eintritt in ein Teilschutzfeld und Austritt aus einem Teilschutzfeld herauf- und heruntergezählt wird.

7. Überwachungsvorrichtung nach einem der vorhergehenden Ansprüche,
wobei die Sicherheitssteuerung (36) dafür ausgebildet ist, ein sicheres Ausgangssignal an einem der sicheren Ausgänge (32, 34) erst dann als neues sicheres Ausgangssignal zu verarbeiten, wenn zwischenzeitlich an dem anderen sicheren Ausgang (34, 32) ein sicheres Ausgangssignal anliegt.

8. Überwachungsvorrichtung nach einem der vorhergehenden Ansprüche,
wobei die Teilschutzfelder untereinander eine gleiche Form und/oder Größe aufweisen.

9. Überwachungsvorrichtung nach einem der vorhergehenden Ansprüche,
wobei die Sicherheitssteuerung (36) dafür ausgebildet ist, die Schutzfelder (38A, 38B) längs der ersten Linie zu verschieben, sobald ein sicheres Ausgangssignal an einem der sicheren Ausgänge (32, 34) anliegt, wobei insbesondere das Verschieben durch Umschaltung auf eine versetzte Anordnung der Schutzfelder (38A, 38B) erfolgt.

10. Überwachungsvorrichtung nach Anspruch 9,
wobei die Sicherheitssteuerung (36) dafür ausgebildet ist, die Schutzfelder (38-B) bei einem sicheren Ausgangssignal an dem ersten sicheren Ausgang (32) in die eine Richtung und bei einem sicheren Ausgangssignal an dem zweiten sicheren Ausgang (34) in die andere Richtung längs der ersten Linie zu verschieben.

11. Überwachungsvorrichtung nach einem der vorhergehenden Ansprüche,
wobei der erste sichere optoelektronische Sensor (10, 10a) eine 3D-Kamera, insbesondere eine Lichtlaufzeitkamera ist.

12. Überwachungsvorrichtung nach einem der vorhergehenden Ansprüche,
wobei die Sicherheitssteuerung (36) dafür ausgebildet ist, eine Absicherung einer von der Überwachungsvorrichtung überwachten Maschine auszulösen, wenn sich das Objekt (20) an einer gefährlichen Position und/oder in einer gefährlichen Bewegung befindet.

13. Überwachungsvorrichtung nach einem der vorhergehenden Ansprüche,
die einen zweiten optoelektronischen Sensor (10b) mit einem zweiten Lichtempfänger, mindestens einem dritten sicheren Ausgang und einem vierten sicheren Ausgang sowie eine zweite Steuer- und Auswertungseinheit aufweist, die für eine Schutzfeldüberwachung mindestens eines dritten Schutzfeldes mit mehreren dritten Teilschutzfeldern und eines vierten Schutzfeldes mit mehreren vierten Teilschutzfeldern mit Ausgabe eines sicheren Ausgangssignals an dem dritten sicheren Ausgang oder dem vierten sicheren Ausgang bei Objekteingriff ausgebildet ist, wobei die dritten Teilschutzfelder und vierten Teilschutzfelder längs einer zweiten Linie quer zu der ersten Linie alternierend aufeinanderfolgend angeordnet sind und wobei insbesondere die Sicherheitssteuerung (36) dafür ausgebildet ist, eine zeitliche Abfolge der sicheren Ausgangssignalen an dem dritten sicheren Ausgang und dem vierten sicheren Ausgang auszuwerten, um eine Position des Objekts (20) längs der zweiten Linie zu bestimmen.

14. Überwachungsvorrichtung nach einem der Ansprüche 1 bis 12,
wobei die erste Steuer- und Auswertungseinheit (28) dafür ausgebildet ist, die Schutzfeldüberwachung auf ein drittes Schutzfeld mit mehreren dritten Teilschutzfeldern und ein viertes Schutzfeld mit mehreren vierten Teilschutzfeldern umzuschalten, wobei die dritten Teilschutzfelder und vierten Teilschutzfelder längs einer zweiten Linie quer zu der ersten Linie alternierend aufeinanderfolgend angeordnet sind, und wobei insbesondere die Sicherheitssteuerung (36) dafür ausgebildet ist, eine zeitliche Abfolge der sicheren Ausgangssignale auszuwerten, um eine Position des Objekts längs der zweiten Linie zu bestimmen.

15. Verfahren zur sicheren Objektverfolgung eines Objekts (20) in einem Überwachungsbereich (18) mit mindestens einem ersten sicheren optoelektronischen Sensor (10, 10a), der anhand eines Empfangssignals eines Lichtempfängers (26) in einer ersten Steuer- und Auswertungseinheit (28) mindestens ein erstes Schutzfeld (38A) und ein zweites Schutzfeld (38B) in dem Überwachungsbereich (18) auf Objekteingriffe überwacht und bei einem Objekteingriff in das erste Schutzfeld (38A) ein sicheres Ausgangssignal an einem ersten sicheren Ausgang (32) und bei einem Objekteingriff in das zweite Schutzfeld (38B) ein sicheres Ausgangssignal an einem zweiten sicheren Ausgang (34) ausgibt, wobei die sicheren Ausgangssignale ausgewertet werden, wobei die Begriffe "sicher" und "Sicherheit" bedeuten, dass Maßnahmen ergriffen sind, um Fehler bis zu einem spezifizierten Sicherheitsniveau zu beherrschen und Vorschriften einer Sicherheitsnorm für Maschinensicherheit oder berührungslos wirkende Schutzeinrichtungen einzuhalten und wobei das erste Schutzfeld (38A) und das zweite Schutzfeld (38B) jeweils ein mittels geometrischer Vorgaben in der ersten Steuer- und Auswertungseinheit (28) konfigurierter oder über eine Schnittstelle (30) eingespielter Teilbereich des Überwachungsbereichs (18) ist, wobei das erste Schutzfeld (38A) mehrere erste Teilschutzfelder und das zweite Schutzfeld (38B) mehrere zweite Teilschutzfelder aufweist und wobei die ersten Teilschutzfelder und die zweiten Teilschutzfelder längs einer Linie abwechselnd aufeinanderfolgend angeordnet sind.

## Claims

1. A monitoring device for safe object tracking of an object (20) in a monitoring area (18), having at least one first safe optoelectronic sensor (10, 10a) and a safety controller (36) connected to the first optoelectronic sensor (10, 10a), the first optoelectronic sensor (10, 10a) comprising a first light receiver (26) for generating a received signal from received light (22) from the monitoring area (18), at least a first safe output (32) and a second safe output (34), each for outputting a safe output signal, and a first control and evaluation unit (28) configured to safely monitor at least a first protective field (38A) and a second protective field (38B) in the monitoring area (18) for object intrusions using the received signal and, in the event of an object intrusion into the first protective field (38A), to output a safe output signal at the first safe output (32) and, in the event of an object intrusion into the second protective field (38B), to output a safe output signal at the second safe output (34), wherein the safety controller (36) is configured to evaluate the safe output signals, wherein the terms "safe" and "safety" mean that measures are taken to control faults up to a specified safety level and to comply with regulations of a safety standard for machine safety or electro-sensitive protective equipment, and wherein the first protective field (38A) and the second protective field (38B) are each a partial area of the monitoring area (18) configured by means of geometric specifications in the first control and evaluation unit (28) or imported via an interface (30), wherein the first protective field (38A) comprises a plurality of first partial protective fields and the second protective field (38B) comprises a plurality of second partial protective fields, and wherein the first partial protective fields and the second partial protective fields are arranged alternately in succession along a line.

2. The monitoring device according to claim 1,
wherein the safety controller (36) is configured to evaluate a time sequence of the safe output signals at the first safe output (32) and the second safe output (34) in order to determine a position of the object (20) along the first line.

3. The monitoring device according to claim 1 or 2,
wherein the first partial protection fields form a first code track and the second partial protection fields form a second code track.

4. The monitoring device according to any of the preceding claims,
wherein the first partial protective fields and the second partial protective fields partially overlap one another in the direction of the first line, in particular by half, and/or wherein a free region without a partial protective field is arranged along the first line between the respective partial protective fields.

5. The monitoring device according to any of the preceding claims,
wherein the safety controller (36) is configured to evaluate the time sequence of the safe output signals using an incremental encoder method for evaluating the scanning signals of two code tracks of a measuring standard which are offset from one another.

6. The monitoring device according to any of the preceding claims,
wherein the safety controller (36) is configured to determine a direction of movement of the object (20) from the time sequence of the safe output signals, and wherein in particular the safety controller (36) comprises a counter that is counted up and down in accordance with the direction of movement when entering a partial protective field and exiting a partial protective field.

7. The monitoring device according to any of the preceding claims,
wherein the safety controller (36) is configured to process a safe output signal at one of the safe outputs (32, 34) as a new safe output signal only if a safe output signal is present at the other safe output (34, 32) in the meantime.

8. The monitoring device according to any of the preceding claims,
wherein the partial protective fields have the same shape and/or size.

9. The monitoring device according to any of the preceding claims,
wherein the safety controller (36) is configured to shift the protective fields (38A, 38B) along the first line as soon as a safe output signal is present at one of the safe outputs (32, 34), wherein in particular the shifting takes place by switching to a staggered arrangement of the protective fields (38A, 38B).

10. The monitoring device according to claim 9,
wherein the safety controller (36) is configured to shift the protective fields (38A-B) in one direction along the first line in the event of a safe output signal at the first safe output (32) and in the other direction along the first line in the event of a safe output signal at the second safe output (34).

11. The monitoring device according to any of the preceding claims,
wherein the first safe optoelectronic sensor (10, 10a) is a 3D camera, in particular a time-of-flight camera.

12. The monitoring device according to any of the preceding claims,
wherein the safety controller (36) is configured to trigger a safeguarding of a machine monitored by the monitoring device if the object (20) is in a dangerous position and/or in a dangerous movement.

13. The monitoring device according to any of the preceding claims,
comprising a second optoelectronic sensor (10b) with a second light receiver, at least one third safe output and a fourth safe output and a second control and evaluation unit configured for protective field monitoring of at least one third protective field with a plurality of third partial protective fields and a fourth protective field with a plurality of fourth partial protective fields with output of a safe output signal at the third safe output or the fourth safe output in the event of an object intrusion, wherein the third partial protective fields and fourth partial protective fields are arranged in alternating succession along a second line transverse to the first line and wherein, in particular, the safety controller (36) is configured to evaluate a time sequence of the safe output signals at the third safe output and the fourth safe output in order to determine a position of the object (20) along the second line.

14. The monitoring device according to any of claims 1 to 12,
wherein the first control and evaluation unit (28) is configured to switch the protective field monitoring to a third protective field with a plurality of third partial protective fields and a fourth protective field with a plurality of fourth partial protective fields, wherein the third partial protective fields and fourth partial protective fields are arranged in alternating succession along a second line transversely to the first line, and wherein in particular the safety controller (36) is configured to evaluate a time sequence of the safe output signals in order to determine a position of the object along the second line.

15. A method for safe object tracking of an object (20) in a monitoring area (18) by means of at least one first safe optoelectronic sensor (10, 10a) that monitors, in a first control and evaluation unit (28), at least a first protective field (38A) and a second protective field (38B) in the monitoring area (18) for object intrusions using a received signal from a light receiver (26) and outputs a safe output signal at a first safe output (32) in the event of an object intrusion into the first protective field (38A) and outputs a safe output signal at a second safe output (34) in the event of an object intrusion into the second protective field (38B), wherein the safe output signals are evaluated, wherein the terms "safe" and "safety" mean that measures are taken to control faults up to a specified safety level and to comply with regulations of a safety standard for machine safety or electro-sensitive protective equipment, and wherein the first protective field (38A) and the second protective field (38B) are each a partial area of the monitoring area (18) configured by means of geometric specifications in the first control and evaluation unit (28) or imported via an interface (30), wherein the first protective field (38A) has a plurality of first partial protective fields and the second protective field (38B) has a plurality of second partial protective fields, and wherein the first partial protective fields and the second partial protective fields are arranged alternately in succession along a line.

## Revendications

1. Dispositif de surveillance pour le suivi sécurisé d'un objet (20) dans une zone à surveiller (18), comprenant au moins un premier capteur optoélectronique sécurisé (10, 10a) et une commande de sécurité (36) connectée au premier capteur optoélectronique (10, 10a), sachant que
le premier capteur optoélectronique (10, 10a) comprend un premier récepteur de lumière (26) pour générer un signal de réception à partir d'une lumière de réception (22) provenant de la zone à surveiller (18), au moins une première sortie sécurisée (32) et une deuxième sortie sécurisée (34) destinées chacune à émettre un signal de sortie sécurisé, ainsi qu'une première unité de commande et d'évaluation (28) conçue pour surveiller de façon sécurisée, quant à des intrusions d'objets, au moins un premier champ de protection (38A) et un deuxième champ de protection (38B) dans la zone à surveiller (18) à l'aide du signal de réception, et pour émettre, en cas d'intrusion d'un objet dans le premier champ de protection (38A), un signal de sortie sécurisé à la première sortie sécurisée (32), et pour émettre, en cas d'intrusion d'un objet dans le deuxième champ de protection (38B), un signal de sortie sécurisé à la deuxième sortie sécurisée (34),
la commande de sécurité (36) est conçue pour évaluer les signaux de sortie sécurisés,
les termes « sécurisé(e) » et « sécurité » signifient des mesures prises pour maîtriser les erreurs jusqu'à un niveau de sécurité spécifiée et pour respecter les prescriptions d'une norme de sécurité pour la sécurité des machines ou des équipements de protection électrosensibles, et
le premier champ de protection (38A) et le deuxième champ de protection (38B) sont chacun une zone partielle de la zone à surveiller (18) configurée au moyen de données géométriques dans la première unité de commande et d'évaluation (28) ou introduite via une interface (30),
dans lequel
le premier champ de protection (38A) présente plusieurs premiers champs de protection partiels et le deuxième champ de protection (38B) présente plusieurs deuxièmes champs de protection partiels, et
les premiers champs de protection partiels et les deuxièmes champs de protection partiels sont disposés en alternance les uns à la suite des autres le long d'une ligne.

2. Dispositif de surveillance selon la revendication 1,
dans lequel la commande de sécurité (36) est conçue pour évaluer une séquence temporelle des signaux de sortie sécurisés sur la première sortie de sécurité (32) et sur la deuxième sortie de sécurité (34), afin de déterminer une position de l'objet (20) le long de la première ligne.

3. Dispositif de surveillance selon la revendication 1 ou 2,
dans lequel les premiers champs de protection partiels forment une première piste de code et les deuxièmes champs de protection partiels forment une deuxième piste de code.

4. Dispositif de surveillance selon l'une des revendications précédentes,
dans lequel les premiers champs de protection partiels et les deuxièmes champs de protection partiels se chevauchent partiellement, en particulier par moitié, en direction de la première ligne, et/ou
une zone libre dépourvue de champ de protection partiel est disposée le long de la première ligne entre les champs de protection partiels.

5. Dispositif de surveillance selon l'une des revendications précédentes,
dans lequel la commande de sécurité (36) est conçue pour évaluer la séquence temporelle des signaux de sortie sécurisés par un procédé de codeur incrémental pour l'évaluation des signaux de balayage de deux pistes de code, décalées l'une par rapport à l'autre, d'une mesure matérialisée.

6. Dispositif de surveillance selon l'une des revendications précédentes,
dans lequel la commande de sécurité (36) est conçue pour déterminer une direction du mouvement de l'objet (20) à partir de la séquence temporelle des signaux de sortie sécurisés, et
en particulier, la commande de sécurité (36) comprend un compteur qui est incrémenté et décrémenté en fonction de la direction du mouvement à l'entrée dans un champ de protection partiel et à la sortie d'un champ de protection partiel.

7. Dispositif de surveillance selon l'une des revendications précédentes,
dans lequel la commande de sécurité (36) est conçue pour ne traiter un signal de sortie sécurisé sur l'une des sorties sécurisées (32, 34) en tant que nouveau signal de sortie sécurisé que si un signal de sortie sécurisé est appliqué entre-temps à l'autre sortie sécurisée (34, 32).

8. Dispositif de surveillance selon l'une des revendications précédentes,
dans lequel les champs de protection partiels présentent une forme et/ou une taille identique(s) entre eux.

9. Dispositif de surveillance selon l'une des revendications précédentes,
dans lequel la commande de sécurité (36) est conçue pour déplacer les champs de protection (38A, 38B) le long de la première ligne dès qu'un signal de sortie sécurisé est appliqué à l'une des sorties sécurisées (32, 34), en particulier, le déplacement étant réalisé par commutation vers une disposition décalée des champs de protection (38A, 38B).

10. Dispositif de surveillance selon la revendication 9,
dans lequel la commande de sécurité (36) est conçue pour déplacer les champs de protection (38-B) le long de la première ligne dans un sens lors d'un signal de sortie sécurisé sur la première sortie sécurisée (32) et dans l'autre sens lors d'un signal de sortie sécurisé sur la deuxième sortie sécurisée (34).

11. Dispositif de surveillance selon l'une des revendications précédentes,
dans lequel le premier capteur optoélectronique sécurisé (10, 10a) est une caméra 3D, en particulier une caméra à temps de vol de lumière.

12. Dispositif de surveillance selon l'une des revendications précédentes,
dans lequel la commande de sécurité (36) est conçue pour déclencher une sécurisation d'une machine surveillée par le dispositif de surveillance si l'objet (20) se trouve dans une position dangereuse et/ou dans un mouvement dangereux.

13. Dispositif de surveillance selon l'une des revendications précédentes,
comprenant un deuxième capteur optoélectronique (10b) ayant un deuxième récepteur de lumière, au moins une troisième sortie sécurisée et une quatrième sortie sécurisée ainsi qu'une deuxième unité de commande et d'évaluation qui est conçue pour surveiller au moins un troisième champ de protection ayant plusieurs troisièmes champs de protection partiels et un quatrième champ de protection ayant plusieurs quatrièmes champs de protection partiels avec émission d'un signal de sortie sécurisé sur la troisième sortie sécurisée ou sur la quatrième sortie sécurisé en cas d'intrusion d'un objet,
dans lequel les troisièmes champs de protection partiels et les quatrièmes champs de protection partiels sont disposés en alternance les uns à la suite des autres le long d'une deuxième ligne transversale à la première ligne, et, en particulier, la commande de sécurité (36) est conçue pour évaluer une séquence temporelle des signaux de sortie sécurisés sur la troisième sortie sécurisée et sur la quatrième sortie sécurisée, afin de déterminer une position de l'objet (20) le long de la deuxième ligne.

14. Dispositif de surveillance selon l'une des revendications 1 à 12,
dans lequel la première unité de commande et d'évaluation (28) est conçue pour commuter la surveillance du champ de protection vers un troisième champ de protection ayant plusieurs troisièmes champs de protection partiels et vers un quatrième champ de protection ayant plusieurs quatrièmes champs de protection partiels,
les troisièmes champs de protection partiels et les quatrièmes champs de protection partiels sont disposés en alternance les uns à la suite des autres le long d'une deuxième ligne transversale à la première ligne, et
en particulier, la commande de sécurité (36) est conçue pour évaluer une séquence temporelle des signaux de sortie sécurisés, afin de déterminer une position de l'objet le long de la deuxième ligne.

15. Procédé de suivi sécurisé d'un objet (20) dans une zone à surveiller (18) comprenant au moins un premier capteur optoélectronique sécurisé (10, 10a), qui, à l'aide d'un signal de réception d'un récepteur de lumière (26) dans une première unité de commande et d'évaluation (28), surveille au moins un premier champ de protection (38A) et un deuxième champ de protection (38B) dans la zone à surveiller (18) quant à des intrusions d'objets et qui, en cas d'intrusion d'un objet dans le premier champ de protection (38A), émet un signal de sortie sécurisé à une première sortie sécurisée (32) et qui, en cas d'intrusion d'un objet dans le deuxième champ de protection (38B), émet un signal de sortie sécurisé à une deuxième sortie sécurisée (34), sachant que
les signaux de sortie sécurisés sont évalués,
les termes « sécurisé(e) » et « sécurité » signifient des mesures prises pour maîtriser les erreurs jusqu'à un niveau de sécurité spécifiée et pour respecter les prescriptions d'une norme de sécurité pour la sécurité des machines ou des équipements de protection électrosensibles, et
le premier champ de protection (38A) et le deuxième champ de protection (38B) sont chacun une zone partielle de la zone à surveiller configurée au moyen de données géométriques dans la première unité de commande et d'évaluation (28) ou introduite via une interface (30),
dans lequel
le premier champ de protection (38A) présente plusieurs premiers champs de protection partiels et le deuxième champ de protection (38B) présente plusieurs deuxièmes champs de protection partiels, et
les premiers champs de protection partiels et les deuxièmes champs de protection partiels sont disposés en alternance les uns à la suite des autres le long d'une ligne.
